# EUROPEAN PATENT SPECIFICATION

(11) **EP 2 610 155 B1**
(45) Date of publication and mention of the grant of the patent: **10.12.2014**
(21) Application number: 12190474.2
(22) Date of filing: 30.10.2012
(51) Int. Cl.: B62J 15/00

(54) **Straddle-type vehicle**
Grätschsitz-Fahrzeug
Véhicule de type à selle

(30) Priority: 28.12.2011 JP 2011289097
(43) Date of publication of application: 03.07.2013
(73) Proprietor: Yamaha Hatsudoki Kabushiki Kaisha, Shizuoka-ken Shizuoka 438-8501 (JP)
(72) Inventor: Sou, Atushi, Shizuoka-ken, 438-8501 (JP); Oosumi, Masumi, Shizuoka-ken, 438-8501 (JP); Tezuka, Hiroyuki, Shizuoka-ken, 438-8501 (JP)
(74) Representative: Stöckeler, Ferdinand

(56) References cited:
- JP-A- 2002 235 535
- JP-A- 2006 143 082
- US-A- 4 280 582
- US-A- 4 402 379
- US-B1- 6 283 242

## Description

### TECHNICAL FIELD

The present invention relates to a straddle-type vehicle.

The present application claims priority from Japanese Patent Application No. 2011-289097, filed on December 28, 2012.

### BACKGROUND ART

In a straddle-type vehicle having an engine as a driving power source, dust or the like contained in the air supplied to the engine may cause abrasion of the inside of the engine, consequently leading to a shorter engine life span. For this reason, an air cleaner, which is an apparatus for cleaning air, is generally provided on the upstream side of the intake pipe for supplying air to the engine.

It is known that in order to prevent splashing of water and mud while the straddle-type vehicle is running, a mudguard unit may be provided on the vehicle body cover that covers the body frame. However, in order to improve the mudguard performance for the rear wheel, it is preferable to provide a rear fender that covers the rear wheel and swings along with the rear wheel, as a separate part from the vehicle body cover. Patent Literature 1 is considered the closest prior art and discloses a motorcycle in which an air cleaner is disposed above the rear fender that covers the rear wheel.

### CITATION LIST

### Patent Literature

[Patent Literature 1] JP 2006-143082 A

### SUMMARY OF INVENTION

### TECHNICAL PROBLEM

It is difficult to dispose a large capacity air cleaner above the rear fender because the space available there for the air cleaner is limited. As a consequence, when the air cleaner is disposed above the rear fender, the capacity of the air cleaner is small as in the motorcycle described in Patent Literature 1, so the air cleaning performance required for the air cleaner may not be sufficiently obtained. This problem tends to arise particularly in a straddle-type with a low seat frame (in other words, in a straddle-type vehicle with a low seat position).

The present invention has been accomplished in view of the foregoing and other problems, and it is an object of the invention to provide a straddle-type vehicle equipped with a rear fender that ensures a sufficient capacity for the air cleaner by effectively utilizing limited space and that has excellent air cleaning performance.

### SOLUTION TO PROBLEM

The present invention provides a straddle-type vehicle comprising: a body frame; an engine unit having an engine and having an front end portion swingably supported by the body frame; a rear wheel supported at a rear end portion of the engine unit; a rear fender supported on the engine unit so as to be swingable relative to the body frame along with the rear wheel, the rear fender covering a portion of the rear wheel; an intake pipe for introducing air to the engine; and an air cleaner connected to the intake pipe. The rear fender has an upper portion positioned above the rear wheel, and side portions positioned beside the rear wheel. The air cleaner forms at least a portion of the upper portion of the rear fender.

In the straddle-type vehicle according to the present invention, the air cleaner forms at least a portion of the upper portion of the rear fender, and therefore, it is not necessary to dispose an air cleaner separately above the rear fender. Therefore, there is a greater additional spatial margin than the case in which an air cleaner is disposed above the rear fender. As a result, the capacity of the air cleaner can be made larger. This can improve the air cleaning performance of the air cleaner.

In one embodiment of the present invention, a leftmost end of the air cleaner is positioned to the left of the vehicle center line, and a rightmost end the air cleaner is positioned to the right of the vehicle center line.

Since the air cleaner is formed over a wide region from the left of the vehicle center line to the right in this way, the air cleaner can be ensured to have a large capacity.

In one embodiment of the present invention, an entire lateral part of a front portion of the rear fender is formed by the air cleaner.

By forming the entire front portion of the rear fender by the air cleaner in this way, the air cleaner can be ensured to have a large capacity.

In one embodiment of the present invention, the air cleaner and a portion of the rear fender excluding the air cleaner are assembled with each other, and a boundary between the air cleaner and the portion of the rear fender excluding the air cleaner is inclined with respect to the vehicle center line, as viewed in plan.

One of the left side portion and the right side portion of the air cleaner may be formed longer along a front-rear direction in this way. As a result, the air cleaner can be ensured to have a large capacity.

In one embodiment of the present invention, the air cleaner and a portion of the rear fender excluding the air cleaner are assembled with each other, and the air cleaner is formed so that, as viewed in plan, its front-to-rear length is longer from one of left and the right sides toward the other.

One of the left side portion and the right side portion of the air cleaner may be formed longer along a front-rear direction in this way. As a result, the air cleaner can be ensured to have a large capacity.

In one embodiment of the present invention, the air cleaner has an air inlet unit for sucking air. The air inlet unit is provided for one of left and right side portions of the air cleaner, with respect to the vehicle center line, that has a longer front-to-rear length than the other.

Thus, the portion of the air cleaner that is near the air inlet unit has a long front-to-rear length. As a result, a relatively large space can be formed near the air inlet unit within the air cleaner. This can improve the air-intake performance of the air cleaner.

In one embodiment of the present invention, a connecting portion of the intake pipe for connecting the intake pipe to the engine and a connecting portion thereof for connecting the intake pipe to the air cleaner are disposed on the vehicle center line, as viewed in plan.

As a result, the intake pipe has no or, if any, a little bend in a right/left direction. Therefore, the air-intake characteristics of the engine are improved, and the engine performance is enhanced.

In one embodiment of the present invention, the body frame has a main frame extending rearward and obliquely downward from a head pipe, and left and right seat frames each extending rearward and obliquely upward from the main frame. The body frame is provided with a passenger footrest supported at a rear portion of only one of the right and left seat frames. The air cleaner is formed so that, as viewed in plan, its front-to-rear length is longer from one of left and right sides on which the footrest is provided toward the other.

This serves to avoid the interference between the air cleaner and the footrest. Moreover, since the interference between the air cleaner and the footrest is avoided, the front-to-rear length of the air cleaner is made longer from one of the left and right sides on which the footrest is provided toward the other. Thereby, the air cleaner can be ensured to have a large capacity.

In one embodiment of the present invention, the air cleaner has a first case and a second case, each having an opening formed therein, and an element. The first case and the second case are assembled to each other so that their openings face each other with the main filter element interposed therebetween. The first case has an air inlet unit for sucking air. The intake pipe is connected to the second case. A portion of the upper portion of the rear fender is formed by the second case.

This can ensure a large capacity for the second case (i.e., the portion in which the air that has been cleaned by the element exists, what is called a clean side) of the air cleaner.

In one embodiment of the present invention, the first case is disposed beside the rear fender.

This can ensure a large capacity for the second case of the air cleaner.

In one embodiment of the present invention, the straddle-type vehicle further has a rear cushion unit provided between a rear portion of the body frame and a rear portion of the engine unit. One of a left side portion and a right side portion of the rear fender has a recessed portion in which a portion of the rear cushion unit is accommodated. A middle position of the air cleaner that is between a leftmost end and a rightmost end of the air cleaner is biased toward an opposite side to one of left and right sides of the vehicle center line in which the recessed portion of the rear fender is formed.

Since the air cleaner is biased toward the opposite side to the rear cushion unit, the capacity of the air cleaner can be made large without being interfered with the rear cushion unit.

In one embodiment of the present invention, the air cleaner and a portion of the rear fender excluding the air cleaner are fastened to each other by a fastener in the upper portion, a left side portion, and a right side portion of the rear fender.

The air cleaner swings along with the rear fender. However, with the simple structure, the air cleaner can be firmly secured to the portion of the rear fender other than the air cleaner.

In one embodiment of the present invention, the air cleaner and a portion of the rear fender excluding the air cleaner are assembled with each other. The air cleaner and the engine unit are fastened to each other by a fastener. The engine unit and the portion of the rear fender excluding the air cleaner are fastened to each other by a fastener.

The air cleaner and the portion of the rear fender excluding the air cleaner swing along with the engine unit. By fastening the air cleaner and the portion of the rear fender excluding the air cleaner to the engine unit, they can be firmly secured to the engine unit. As a result, chattering and position shifting are unlikely to occur between the air cleaner and the portion of the rear fender excluding the air cleaner.

In one embodiment of the present invention, a lower end of the air cleaner is positioned below a middle position of the rear fender that is between an upper end of the rear fender and a lower end thereof.

Since the air cleaner is disposed at a low position in this way, the position of the seat can be made low, for example.

In one embodiment of the present invention, the air cleaner has a maximum vertical length shorter than a vertical length of the rear fender at its upper end position.

Since the vertical length of the air cleaner is short in this way, an additional spatial margin can be ensured above the air cleaner. As a result, for example, the position of the seat can be lowered.

### ADVANTAGEOUS EFFECTS OF INVENTION

As described above, the present invention makes it possible to provide a straddle-type vehicle having a rear fender that ensures a sufficient capacity for an air cleaner by effectively utilizing limited space and that has excellent air cleaning performance.

### BRIEF DESCRIPTION OF DRAWINGS

Fig. 1 is a right side view illustrating a motorcycle according to one embodiment of the present invention;
Fig. 2 is a front view illustrating a rear portion of the motorcycle according to one embodiment of the present invention;
Fig. 3 is a rear view illustrating the rear portion of the motorcycle according to one embodiment of the present invention;
Fig. 4 is a plan view illustrating the rear portion of the motorcycle according to one embodiment of the present invention;
Fig. 5 is a left side view illustrating the rear portion of the motorcycle according to one embodiment of the present invention;
Fig. 6 is a right side view illustrating the rear portion of the motorcycle according to one embodiment of the present invention;
Fig. 7 is a perspective view illustrating an air cleaner and a storage box according to one embodiment of the present invention;
Fig. 8 is an internal cross-sectional view illustrating an engine unit according to one embodiment of the present invention;
Fig. 9 is a plan view illustrating an air cleaner and a rear fender according to one embodiment of the present invention;
Fig. 10 is a left side view illustrating the air cleaner and the rear fender according to one embodiment of the present invention;
Fig. 11 is a right side view illustrating the air cleaner and the rear fender according to one embodiment of the present invention;
Fig. 12 is a horizontal cross-sectional view illustrating the air cleaner according to one embodiment of the present invention;
Fig. 13 is a cross-sectional view taken along line XIII-XIII in Fig. 12; and
Fig. 14 is a horizontal cross-sectional view illustrating an air cleaner according to another embodiment of the present invention.

### DESCRIPTION OF EMBODIMENTS

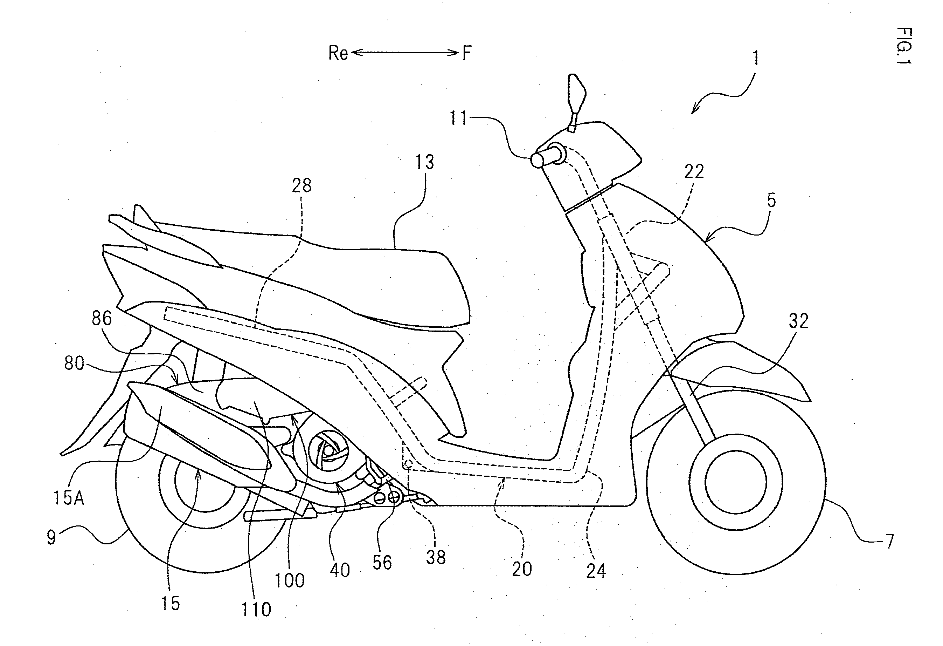

Hereinbelow, embodiments of the present invention will be described. As illustrated in Fig. 1, the straddle-type vehicle according to the present embodiment is a scooter type motorcycle 1. The type of the straddle-type vehicle according to the present invention is, however, not limited to the scooter type motorcycle 1. The straddle-type vehicle according to the present invention may be any other type of motorcycle, such as a moped type motorcycle, an off-road type motorcycle, or an on-road type motorcycle. The straddle-type vehicle according to the present invention is not limited to a motorcycle but may be any other straddle-type vehicle, such as ATV (All Terrain Vehicle). Note that the straddle-type vehicle means a vehicle such that the rider straddles the vehicle when riding.

In the following description, the terms "front," "rear," "left," and "right" respectively refer to front, rear, left, and right as defined based on the perspective of the rider of the motorcycle 1. Reference characters F, Re, L, and R in the drawings indicate front, rear, left, and right, respectively.

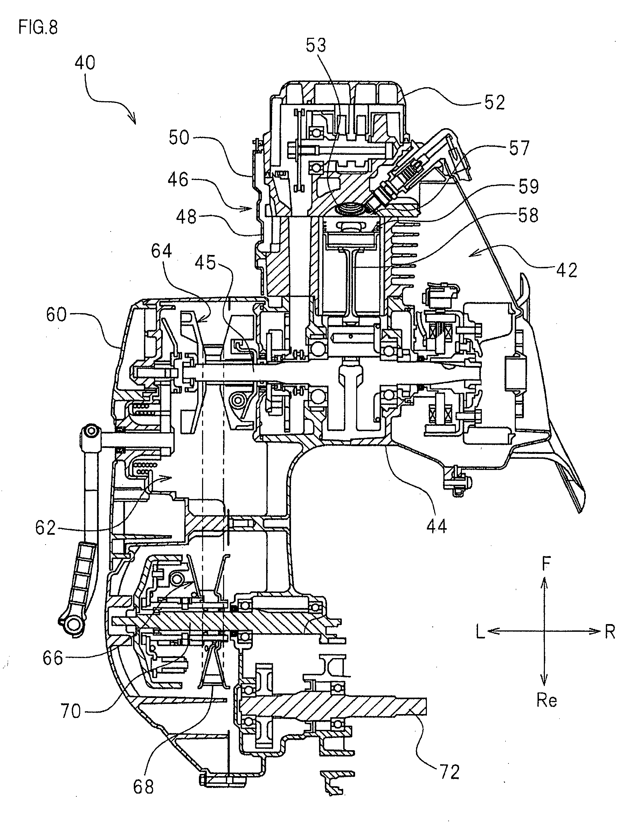

The motorcycle 1 has a vehicle body 5, a front wheel 7, a rear wheel 9, and an engine unit 40 for driving the rear wheel 9. The vehicle body 5 has a handlebar 11, which is operated by the rider, and a seat 13, on which the rider is to be seated. The engine unit 40 is what is called a unit swing type engine unit that has an engine 42 (see Fig. 8). The front end portion of the engine unit 40 is supported by a body frame 20 so that the engine unit can swing about a pivot shaft 38, which is a horizontal axis. That is, the engine unit 40 is supported so as to be swingable relative to the body frame 20.

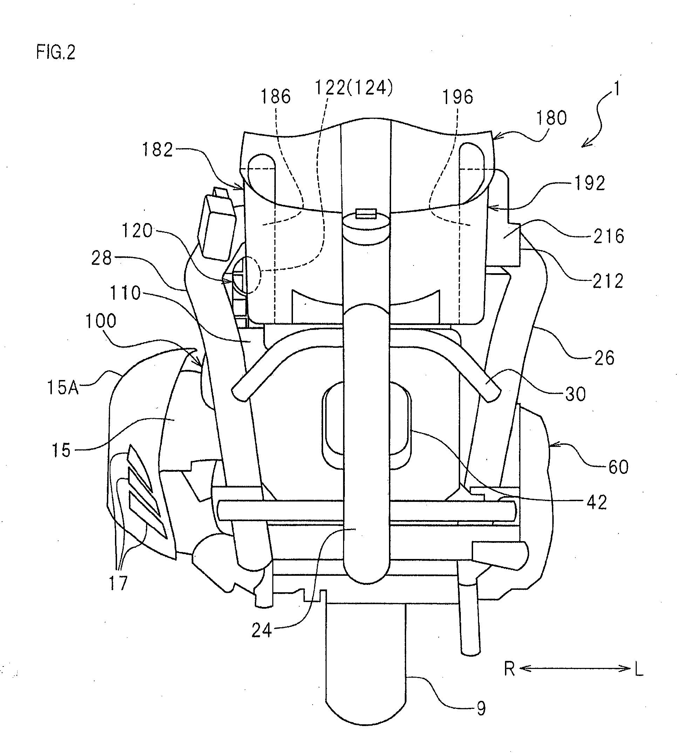

The body frame 20 has a main frame 24 extending rearward and obliquely downward from a head pipe 22, left and right seat frames* 26 (see Fig. 2) and 28 extending rearward and obliquely upward from the main frame 24, and a cross-member 30 (see Fig. 2) provided between the left and right seat frames 26 and 28. A front fork 32 is mounted to the head pipe 22.

A front wheel 7 is supported at a lower end portion of the front fork 32. A rear wheel 9 is supported at a rear end portion of the engine unit 40. A rear fender 80 for covering a portion of the rear wheel 9 is supported on the engine unit 40. The air cleaner 80 can swing relative to the body frame 20, together with the rear wheel 9.

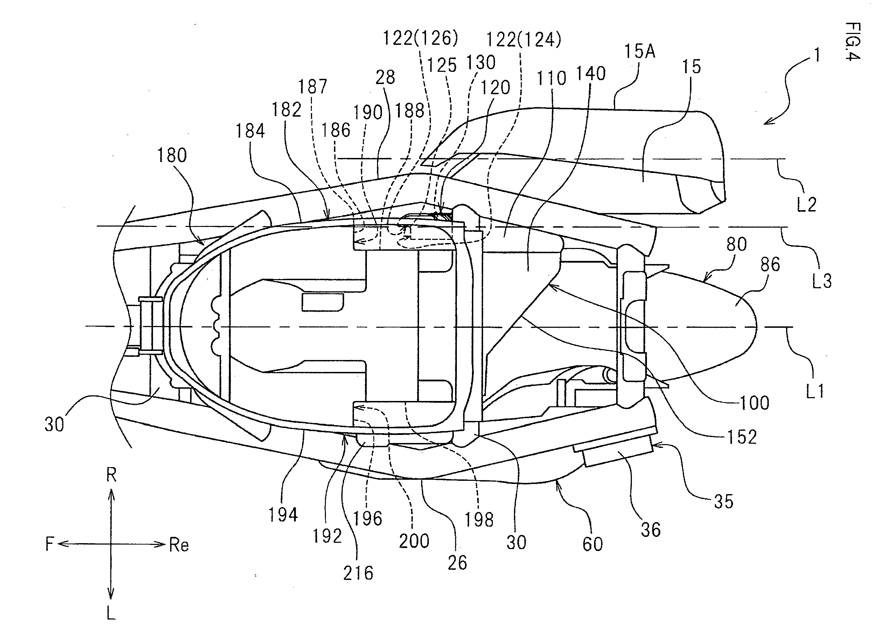

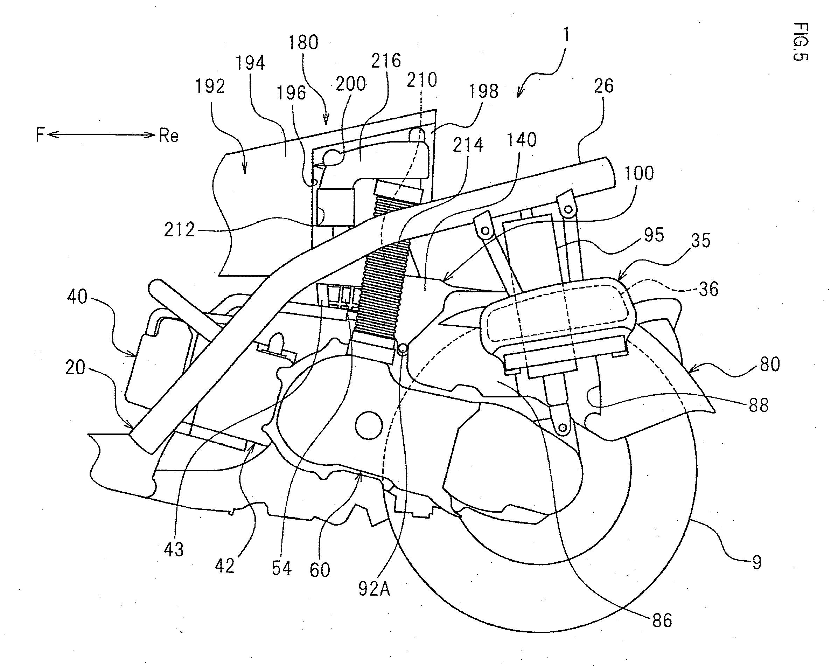

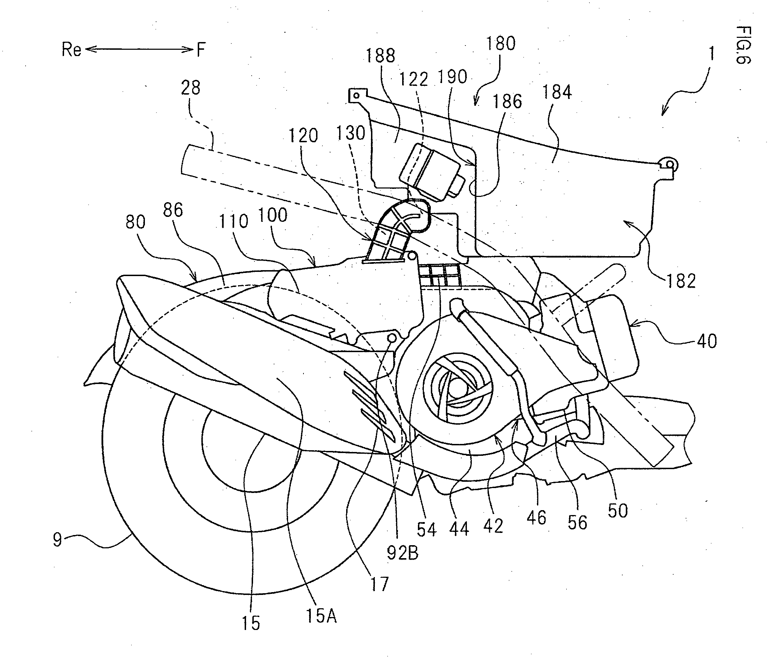

As illustrated in Fig. 4, the motorcycle 1 has a storage box 180 between the left and right seat frames 26 and 28, which is supported by the cross-member 30. The storage box 180 has dimensions such as to accommodate a helmet or the like. An opening is formed in an upper portion of the storage box 180. The seat 13 (see Fig. 1) is configured to be pivotable about the front end portion of the seat 13. When the seat 13 is pivoted so that the rear end portion of the seat 13 moves frontward and obliquely upward, the just-mentioned opening is exposed outside. As illustrated in Fig. 5, the storage box 180 has a left side wall 192 positioned to the right of the left seat frame 26. Also, the storage box 180 has a right side wall 182 positioned to the left of the right seat frame 28, as illustrated in Fig. 6.

As illustrated in Figs. 4 and 5, the motorcycle 1 has a passenger footrest 35 supported on a rear portion of the left seat frame 26 (for example, near the upper portion of the rear wheel 9 when viewed from side). Of the right seat frame 28 and the left seat frame 26, only the left seat frame 26 is provided with the passenger footrest 35. The footrest 35 has a relatively large footrest face 36 (see also Fig. 4). The passenger seated on the seat 13 can put both of his/her feet on the footrest 35.

It is sufficient that the footrest 35 is supported on a rear portion of only one of the left seat frame 26 and the right seat frame 28. The footrest 35 may be supported on a rear portion of the right seat frame 28. However, it is more preferable that the footrest 35 be supported on a rear portion of the left seat frame 26 because, in that way, the passenger can avoid the heat emitted from a muffler 15. Thus, it is preferable that the footrest 35 be provided on one of the left and right seat frames that is opposite the one on which the muffler 15 is provided.

The engine unit 40 is supported by the body frame 20 below the storage box 180. As illustrated in Fig. 8, the engine unit 40 has an engine 42, which is one example of an internal combustion engine, and a V-belt type continuously variable transmission (hereinafter referred to as "CVT") 62. The engine 42 has a crankcase 44, a cylinder block 48 extending frontward and obliquely upward from the crankcase 44, a cylinder head 50 connected to a front portion of the cylinder block 48, and a cylinder head cover 52 connected to a front portion of the cylinder head 50. In the present specification, the entirety of the cylinder block 48, the cylinder head 50, and the cylinder head cover 52 is collectively called a cylinder 46. The cylinder 46 extends frontward and obliquely upward from the crankcase 44. A transmission case 60 is disposed to the left of the crankcase 44. The CVT 62 is disposed in the transmission case 60.

A recessed portion 53, and an intake port and an exhaust port (not shown) that are connected to the recessed portion 53 are formed in the cylinder head 50. An intake pipe 54 (see Fig. 6) is connected to the intake port, and an exhaust pipe 56 (see Fig. 6) is connected to the exhaust port. Note that the intake pipe 54 herein is not limited to a single component but may include one comprising a plurality of components combined together. For example, the intake pipe 54 may be formed by a combination of a pipe connected to the intake port, a throttle body connected to the pipe, a duct connected to the throttle body, and so forth. The top face of a piston 59, the inner circumferential wall of the cylinder block 48, and the recessed portion 53 together form a combustion chamber 57. The piston 59 is connected to a crankshaft 45 via a connecting rod 58. The crank shaft 45 extends leftward and rightward. The crank shaft 45 is accommodated in the crankcase 44.

The CVT 62 has a first pulley 64, which is a driving pulley, a second pulley 66, which is a driven pulley, and a V-belt 68 wrapped around the first pulley 64 and the second pulley 66. A left end portion of the crankshaft 45 protrudes to the left from the crankcase 44. The first pulley 64 is fitted to the left end portion of the crankshaft 45. The second pulley 66 is fitted to a main shaft 70. The main shaft 70 is connected to a rear wheel shaft 72 via a gear mechanism, which is not shown in the drawings. Note that Fig. 8 depicts the state in which the transmission ratio for a front portion of the first pulley 64 and that for a rear portion of the first pulley 64 are different from each other. The second pulley 66 has the same configuration.

The intake pipe 54 is connected to the intake port of the cylinder head 50. The intake pipe 54 extends rearward from the cylinder head 50. As illustrated in Fig. 6, the intake pipe 54 is disposed above the cylinder 46 and below the storage box 180. An air cleaner 100 is connected to a rear portion of the intake pipe 54.

The exhaust pipe 56 is connected to the exhaust port of the cylinder head 50. The exhaust pipe 56 extends rearward from the cylinder head 50. The muffler 15 extending rearward and obliquely upward is connected to a rear end portion of the exhaust pipe 56.

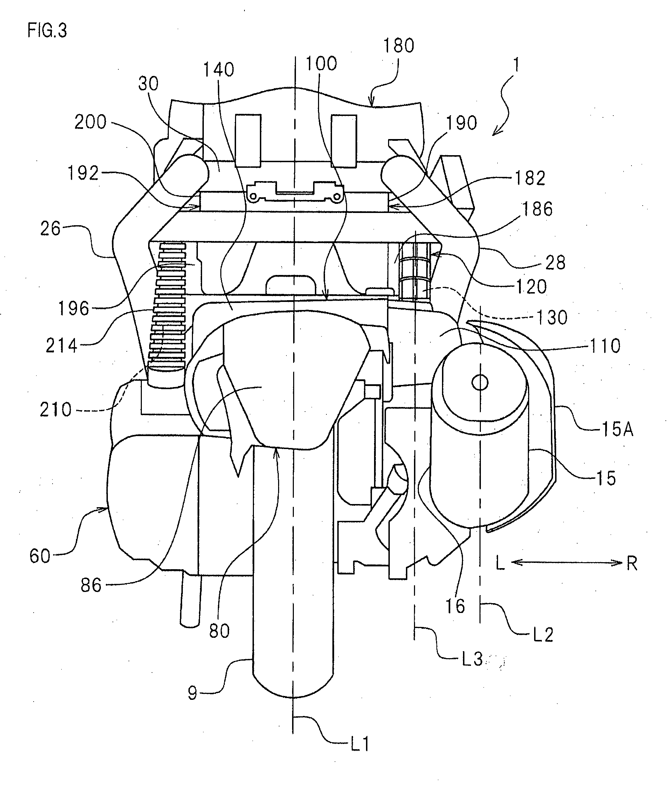

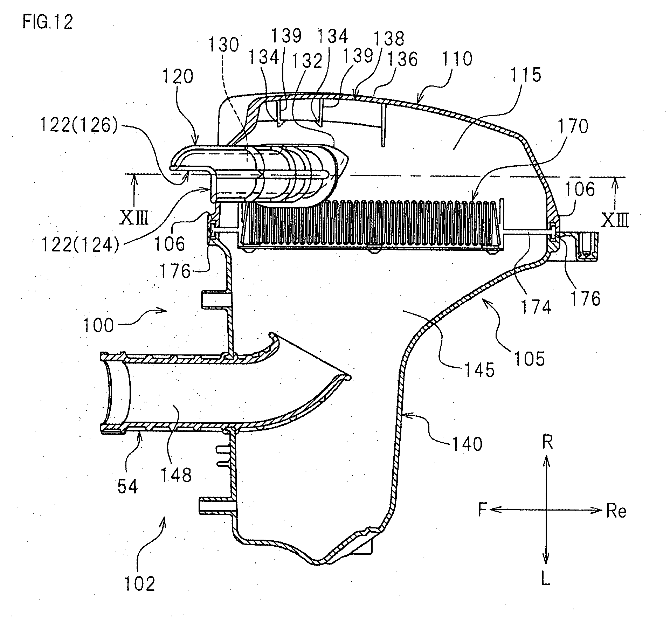

As illustrated in Fig. 12, an air cleaner apparatus 102 according to the present embodiment has the air cleaner 100, a later-described discharge passage 148, and an air inlet unit 120. The air cleaner 100 has an air cleaner case 105. The air cleaner case 105 is provided with the air inlet unit 120. The air inlet unit 120 has an air inlet port 122 for sucking air and an intake passage 130 extending upward from the air cleaner case 105. As illustrated in Fig. 3, the intake passage 130 is disposed to the right of the vehicle center line L1. The air inlet port 122 of the intake passage 130 is disposed to the right of the right side wall 182 of the storage box 180 and to the left of the right seat frame 28. At least a portion of the air inlet port 122 of the intake passage 130 opens toward the right side wall 182 of the storage box 180. In the present embodiment, the intake passage 130 is formed so as to extend frontward, or frontward and obliquely upward. However, the intake passage 130 may extend vertically upward, or frontward and obliquely downward.

It should be noted that in the present specification, the term "vehicle center line" means the line that, as viewed in plan, passes through the lateral (widthwise) center of the front wheel 7 and the lateral (widthwise) center of the rear wheel 9 and extends in a longitudinal direction (a front-rear direction).

As illustrated in Fig. 6, a cover 15A having a plurality of slits 17 formed therein is fitted to the muffler 15. The slits 17 are formed in a front portion of the cover 15A. Each of the slits 17 extends frontward and obliquely downward. The slits 17 are aligned one above the other and arranged parallel to each other. When the motorcycle 1 is running, there is a risk the water on the ground may be splashed up by the front wheel 7, hits the cover 15A, and thereafter scatters upward. However, by providing the slits 17, it is possible to change the direction in which the water splashed up by the front wheel 7 runs. This effectively prevents the water splashed up by the front wheel 7 from hitting the cover 15A and entering the air inlet port 122 of the air cleaner apparatus 102. In addition, after having been momentarily captured by the slits 17, the splashed water becomes easy to flow rearward along the surface of the cover 15A. For this reason, the cover 15A can be cooled by this water. Thus, the muffler 15 that has become hot can be cooled indirectly, and also, the muffler 15 can be cooled effectively.

In the present embodiment, as illustrated in Fig. 3, the center line L2 of the muffler 15 is positioned to the right of the center line L3 of the intake passage 130, when viewed from the rear the motorcycle (vehicle) 1. Preferably, the leftmost end 16 of the muffler 15 is positioned to the right of the center line L3 of the intake passage 130 when viewed from the rear of the vehicle. More preferably, the leftmost end 16 of the muffler 15 is positioned to the right of the rightmost end of the intake passage 130 when viewed from the rear of the vehicle. Such a configuration makes it possible to effectively prevent the heat of the muffler 15 from being transmitted to the intake passage 130, which is connected to the air cleaner 100 and the air cleaner 100.

In the present specification, the term "the center line of the muffler 15" refers to the line that, as viewed in plan, passes through the lateral (widthwise) center of the muffler 15 and extends in a longitudinal direction (a front-rear direction). Likewise, In the present specification, the term "the center line of the intake passage 130" refers to the line that, as viewed in plan, passes through the lateral (widthwise) center of the intake passage 130 and extends in a longitudinal direction (a front/rear direction). In Fig. 3, for convenience in illustration, the vertical lines passing the center lines L1, L2, and L3 are indicated by dash-dotted lines, which are denoted by respective reference characters L1, L2, and L3, in place of the center lines L1, L2, and L3.

As illustrated in Fig. 5, the motorcycle 1 has a rear cushion unit 95 provided between a rear portion of the body frame 20 (typically a rear portion of the left seat frame 26) and a rear portion of the engine unit 40. The rear cushion unit 95 is supported by the left seat frame 26 and the transmission case 60.

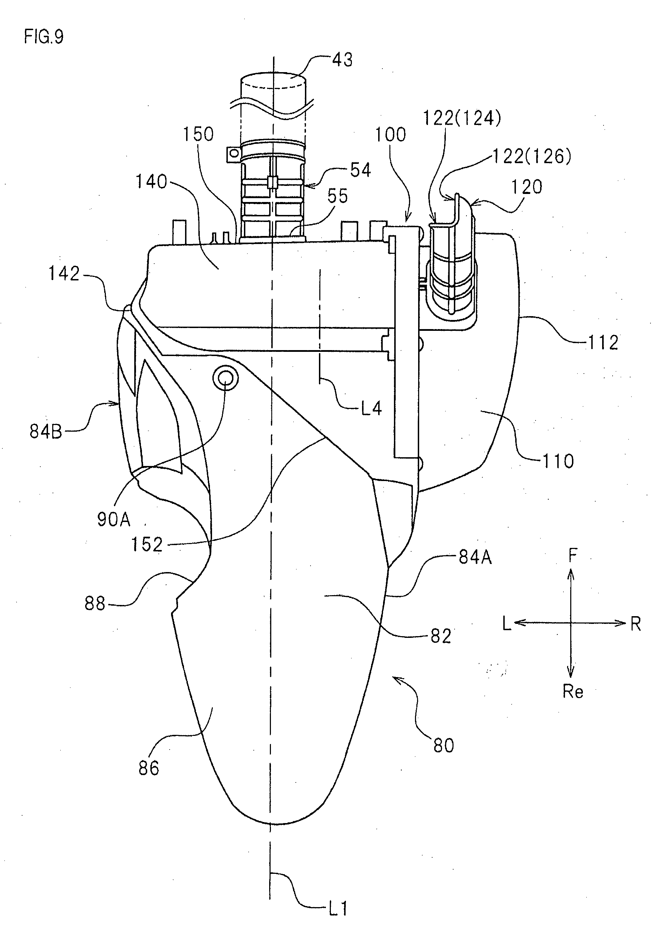

As illustrated in Fig. 9, the air cleaner 100 is connected to the intake pipe 54 for introducing air to the engine unit 42. In the present embodiment, a connecting portion 43 of the intake pipe 54 for connecting the intake pipe 54 to the engine 42 and a connecting portion 55 of the intake pipe 54 for connecting the intake pipe 54 to the air cleaner 100 (second case 140) are disposed on the vehicle center line L1, as viewed in plan. With such a configuration, the intake pipe 54 has no or, if any, a little bend in a right/left direction. Therefore, the air-intake characteristics of the engine 42 are good, and the engine performance improves. In other words, the intake pipe 54 is allowed to extend straight as viewed in plan, so the air-intake resistance can be reduced and the engine performance can be improved.

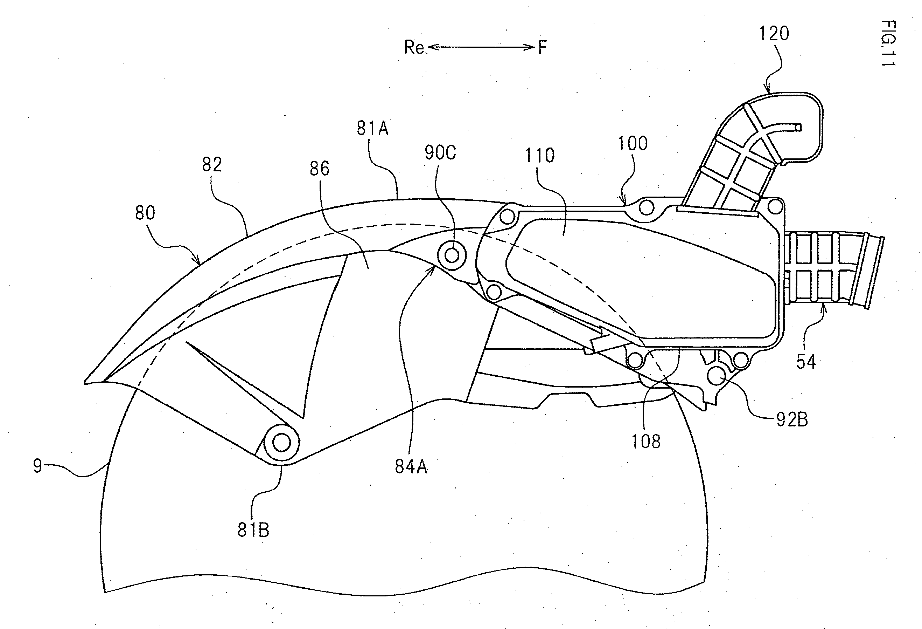

The rear fender 80 has an upper portion 82 positioned above the rear wheel 9 and side portions 84A and 84B positioned to the sides of the rear wheel 9. The air cleaner 100 forms at least a portion of the upper portion 82 of the rear fender 80. As illustrated in Figs. 6 and 11, the air cleaner 100 (first case 110) and the rear wheel 9 are disposed so as to overlap each other as viewed from side.

The front-to-rear length of the right side portion of the air cleaner 100 is set longer than the front-to-rear length of the left side portion thereof. The air inlet unit 120 is provided for one of the left and right side portions of the air cleaner 100, with respect to the vehicle center line L1, that has a longer front-to-rear length than the other. In the present embodiment, the air inlet unit 120 is provided on the right side portion (the later-described first case 110) of the air cleaner 100.

As illustrated in Fig. 12, the air cleaner 100 has the air cleaner case 105 including a first case 110 and a second case 140 each having an opening formed therein, and a main filter element 170 for cleaning air. The first case 110 and the second case 140 are assembled to each other so that their openings face each other with the main filter element 170 interposed therebetween. Thus, the main filter element 170 is accommodated in the air cleaner case 105 so that it divides the interior of the air cleaner case 105 into a first chamber 115 (i.e., the internal space of the first case 110) and a second chamber 145 (i.e., the internal space of the second case 140). The main filter element 170 may be either a dry-type element (an element not impregnated with oil) or a wet-type element (an element impregnated with oil).

In the present specification, the phrase "the main filter element 170 divides the interior of the air cleaner case 105 into the first chamber 115 and the second chamber 145" means to include not only a case in which the main filter element 170 forms the entire dividing wall but also a case in which the main filter element 170 forms a portion of the dividing wall.

The main filter element 170 is fitted to a frame 174. The main filter element 170 can be easily fitted into the case 105 together with the frame 174 by respectively fitting engaging portions 176, 176 formed on both end portions of the frame 174 into engaging grooves 106, 106 provided in the air cleaner case 105. In addition, in case that the main filter element 170 needs to be replaced, the main filter element 170 can be easily removed, so the maintenance can be carried out easily.

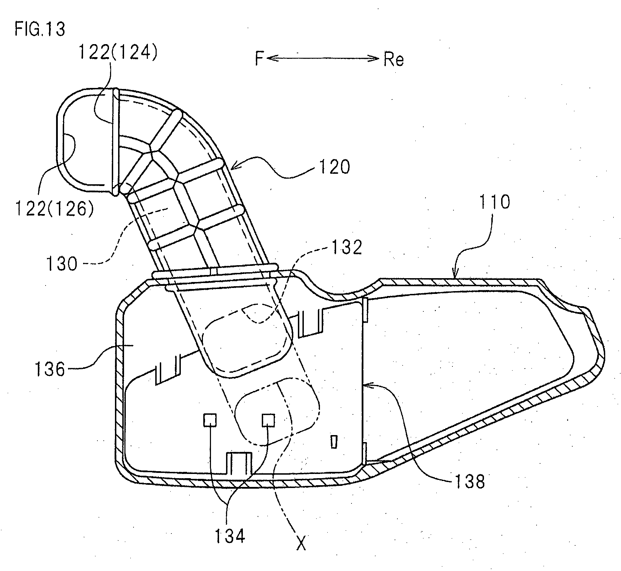

The above-described air inlet unit 120 is connected to the first case 110. More specifically, the first case 110 of the air cleaner 100 is provided with the air inlet unit 120 for sucking the air outside the air cleaner case 105 into the first chamber 115. As described previously, the air inlet unit 120 has the air inlet port 122 for sucking air and the intake passage 130 extending upward from the air cleaner case 105 (more specifically from the first case 110). As illustrated in Fig. 13, the intake passage 130 has an air outlet port 132 for blowing off air into the first chamber 115. As illustrated in Fig. 12, the air outlet port 132 opens in a direction that intersects a pre-filter element 138. The air outlet port 132 opens in a direction that does not intersect the main filter element 170.

As illustrated in Figs. 12 and Fig. 13, the pre-filter element 138 comprising a wet-type element (that is, an element impregnated with oil) is disposed in the first chamber 115. The pre-filter element 138 is disposed spaced apart from the air outlet port 132 so as to be positioned on the axis line of the air outlet port 132. The pre-filter element 138 is disposed so that the blown-off air can hit the pre-filter element 138 but does not pass through the pre-filter element 138.

In the present specification, the phrase "air passes through the pre-filter element 138" means that the air passes through the pre-filter element 138 without substantially changing its flow direction. Therefore, such an air flow that hits the pre-filter element 138 in the front and leaks from the side faces of the pre-filter element 138, not flowing out from the back face of the pre-filter element 138, does not fit the definition of the phrase "air passes through the pre-filter element" herein.

As indicated by the dash-dot-dot line X in Fig. 13, it is preferable that the air outlet port 132 be disposed so that the air outlet port 132 faces a central portion of the pre-filter element 138. In other words, it is preferable that the air outlet port 132 be disposed so that the central region of the pre-filter element 138 is positioned on an extension line of the air outlet port 132. In the present embodiment, the air outlet port 132 is disposed between the main filter element 170 and the pre-filter element 138, as illustrated in Fig. 12. It is preferable that the air outlet port 132 be disposed so that the pre-filter element 138 is positioned on an extension line of at least a portion of the air outlet port 132. It is more preferable that the air outlet port 132 be disposed so that the pre-filter element 138 is positioned on the extension line of the air outlet port 132. In addition, it is preferable that the distance between the air outlet port 132 and the pre-filter element 138 be shorter than the distance between the air outlet port 132 and the main filter element 170. Such a configuration allows the air outside the air cleaner to hit the pre-filter element 138 more effectively.

It is preferable that the surface area of the pre-filter element 138 be greater than the opening area of the air outlet port 132. In addition, it is preferable that the pre-filter element 138 has a surface area greater than the maximum flow passage cross-sectional area of the intake passage 130. Such a configuration allows the air blown off from the air outlet port 132 to hit the pre-filter element 138 sufficiently because the surface area of the pre-filter element 138 is greater. As a result, the air sucked from outside can be cleaned in good condition by the pre-filter element 138.

In the present specification, the term "the surface area of the pre-filter element 138" means the area of the surface of the pre-filter element 138 that is exposed to the first chamber 115 and it does not include the area thereof that is in contact with an opposing wall 136.

It is preferable that the surface area of the main filter element 170 be greater than the surface area of the pre-filter element 138. Such a configuration allows large dust to fall off at the pre-filter element 138 and at the same time relatively small dust to be captured in the pre-filter element 138, so that the air sucked from outside can be preliminarily cleaned. Thereafter, the air can be further cleaned in the main filter element 170.

In the present specification, the term "the surface area of the main filter element 170" means the entire surface area of the main filter element 170 with which the air can be in contact when the air passes from the first chamber 115 to the second chamber 145.

The first case 110 of the air cleaner 100 has an opposing wall 136 facing the air outlet port 132 and not allowing air to pass therethrough. The opposing wall 136 faces the main filter element 170 in the first chamber 115. The opposing wall 136 extends in a vertical direction. The pre-filter element 138 provided on the opposing wall 136 is disposed so as to extend in a vertical direction. Large dust contained in the air sucked from outside tends to fall off after it strikes the pre-filter element 138. As a result, large dust is not captured by the pre-filter element 138 in a large amount, so the pre-filter element 138 is prevented from clogging.

In the present embodiment, the first case 110 of the air cleaner 100 has hook members 134, 134 protruding from the opposing wall 136. The pre-filter element 138 is hooked on the hook members 134, 134, whereby the pre-filter element 138 is provided on the opposing wall 136. As illustrated in Fig. 12, the hook members 134 are fitted in fitting holes 139 formed in the pre-filter element 138 so that the pre-filter element 138 can be mounted onto the opposing wall 136. Such a configuration makes the maintenance of the pre-filter element 138 easy.

In the present embodiment, the pre-filter element 138 is detachably mounted to the opposing wall 136 by being hooked on the hook members 134, 134, but the method of mounting the pre-filter element 138 to the opposing wall 136 is not particularly limited. For example, the pre-filter element 138 may be mounted directly to the opposing wall 136 by using, for example, an adhesive agent.

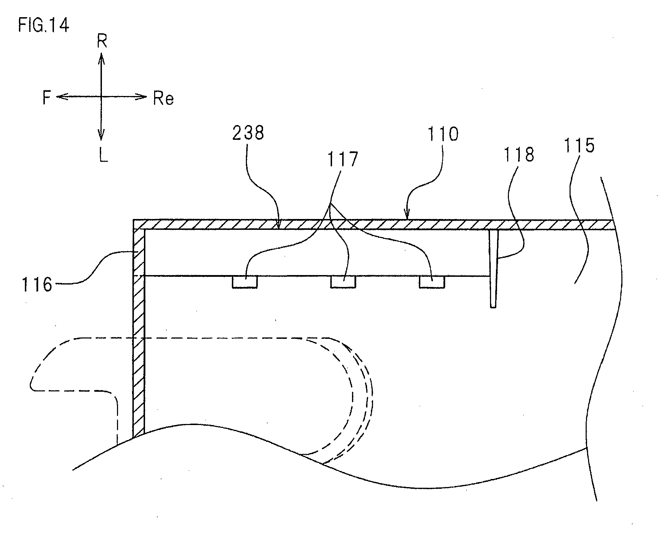

In addition, an example of a modified embodiment is shown in Fig. 14, in which a pre-filter element 238 is fitted into and removed from a slot 116 provided in a front end portion of the first case 110. The pre-filter element 238 inserted from the slot 116 into the first chamber 115 is prevented from moving in the frontward and rearward directions by a positioning wall 118 formed in the first chamber 115. In addition, the pre-filter element 238 is prevented from moving in the leftward and rightward directions by a positioning wall 117 formed in the first chamber 115. When the pre-filter element 238 is fitted in the first chamber 115, the slot 116 is closed by a lid or the like so that the outside air does not flow in through the slot 116.

In the present embodiment, the pre-filter element 138 is provided on a portion of the opposing wall 136 (that is, near the air outlet port 132), but this configuration is merely illustrative. For example, the pre-filter element 138 may be provided over the entire surface of the opposing wall 136. Alternatively, the pre-filter element 138 may be provided on a wall that makes up the first chamber 115 but does not oppose the main filter element 170 (i.e., a different wall from the opposing wall 136).

The second case 140 of the air cleaner 100 is provided with the discharge passage 148 for discharging the air within the second chamber 145 out of the air cleaner case 105. In the present embodiment, the discharge passage 148 constitutes a part of the intake pipe 54 that allows the second case 140 of the air cleaner 100 to communicate with the engine 42.

In the air cleaner apparatus 102, the air outside the air cleaner case 105 is sucked from the air inlet port 122. The sucked air passes through the intake passage 130 and flows from the air outlet port 132 toward a central portion of the pre-filter element 138. When the sucked air strikes the pre-filter element 138, large dust contained in the air falls off into the first chamber 115. On the other hand, a portion of small dust contained in the air is not captured by the pre-filter element 138 and is allowed to flow, while the other portion thereof is captured by the pre-filter element 138. Thus, the air is cleaned by the pre-filter element 138.

Meanwhile, as the small dust is kept captured by the pre-filter element 138, clogging may occur in the pre-filter element 138 to some degree. However, the air that has been sucked in the first chamber 115 can pass through the main filter element 170 without passing through the pre-filter element 138. In addition, the sucked air strikes the surface of the pre-filter element 138 and changes its flow direction. Therefore, the increase of the air resistance resulting from the clogging can be prevented.

The air cleaned by the pre-filter element 138 thereafter passes through the main filter element 170. At this time, the small dust that was not captured by the pre-filter element 138 is captured by the main filter element 170. As a result, the air that has been cleaned in good condition can be supplied to the engine 42.

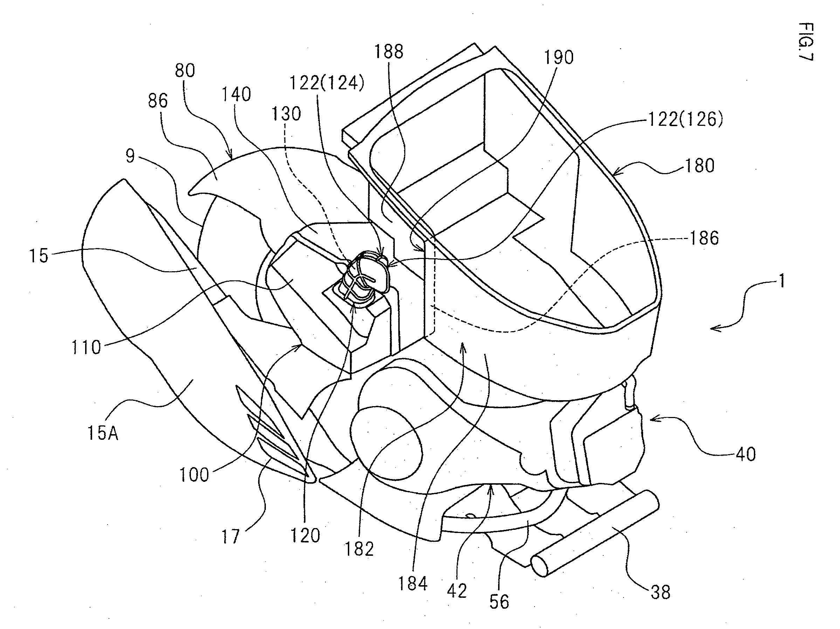

Next, the air inlet port 122 of the intake passage 130 will be described in detail. As illustrated in Figs. 6 and 7, at least a portion of the air inlet port 122 of the intake passage 130 faces the right side wall 182 of the storage box 180.

In the present embodiment, the intake passage 130 is formed by a duct that cannot contract or expand. In such a configuration, the length of the intake passage 130 is invariable, and accordingly, the length of the whole intake passage of the engine 42 (that is, the intake passage 130 of the air inlet unit 120, the passage in the air cleaner 100, and the intake pipe 54) is invariable. As a result, fluctuations in the intake pulse can be suppressed, and the performance of the engine 42 is stabilized.

As illustrated in Figs. 3 and 6, the right side wall 182 of the storage box 180 is positioned to the left of the right seat frame 28. A recessed portion 190 recessed toward the left is formed in the right side wall 182 of the storage box 180. The right side wall 182 of the storage box 180 has a front side wall 184, a rear wall 186 extending leftward from the rear end of the front side wall 184, and a rear side wall 188 extending rearward from the leftmost end of the rear wall 186. The recessed portion 190 is defined by at least the rear wall 186 and the rear side wall 188.

As illustrated in Figs. 3 and 5, the storage box 180 has the left side wall 192 positioned to the right of the left seat frame 26. A recessed portion 200 recessed toward the right is formed in the left side wall 192 of the storage box 180. The left side wall 192 of the storage box 180 has a front side wall 194, a rear wall 196 extending rightward from the rear end of the front side wall 194, and a rear side wall 198 extending rearward from the rightmost end of the rear wall 196. The recessed portion 200 is defined by at least the rear wall 196 and the rear side wall 198.

As illustrated in Fig. 4, in the present embodiment, at least a portion of the air inlet port 122 of the intake passage 130 is disposed in the recessed portion 190. That is, as illustrated in Fig. 2, when viewed from the front of the motorcycle 1, at least a portion of the air inlet port 122 is hidden behind the storage box 180 and cannot be seen. The mud, dust, water, and the like that are splashed up by the front wheel 7 does not easily enter the recessed portion 190. As a result, the air inlet port 122 is prevented from mud, dust, water and the like from entering.

Preferably, at least a portion of the air inlet port 122 of the intake passage 130 faces the rear wall 186. In the present embodiment, as illustrated in Fig. 7, the air inlet port 122 of the intake passage 130 has a first portion 124 that opens frontward and a second portion 126 that opens (i.e., has an opening) leftward. As illustrated in Fig. 4, the air inlet port 122 is disposed so that the rightmost end 187 of the rear wall 186 is positioned to the right of the rightmost end 125 of the first portion 124. The first portion 124 of the air inlet port 122 faces the rear wall 186 of the right side wall 182. The second portion 126 of the air inlet port 122 faces the rear side wall 188 of the right side wall 182. By disposing the first portion 124 of the air inlet port 122 so as to face the rear wall 186 and disposing the second portion 126 of the air inlet port 122 so as to face the rear side wall 188 in this way, the advantageous effects of disposing the air inlet port 122 within the recessed portion 190 can be obtained without reducing the size of the air inlet port 122. That is, both ensuring sufficient housing space of the storage box 180 and preventing the entry of dust into the air cleaner 100 can be achieved at the same time.

As illustrated in Fig. 9, the air inlet port 122 of the present embodiment has an L-shape as viewed in plan, but is not limited to having such a shape. For example, the air inlet port 122 may have a shape such as to open obliquely leftward and frontward.

The air inlet port 122 is disposed in the space between the right of the right side wall 182 of the storage box 180 and the left of the right seat frame 28, which has been an unutilized space in the past. Thus, it is not necessary to provide extra space for the air inlet port 122, and it is possible to utilize the existing space effectively. Moreover, the water, mud, dust, and the like that are splashed up from the front wheel 7 are unlikely to enter the air inlet port 122 because at least a portion of the air inlet port 122 is disposed so as to face the right side wall 182 of the storage box 180. As a result, the amount of dust and the like sucked into the air cleaner 100 is reduced, so the performance deterioration of the engine 42 can be prevented effectively.

Preferably, as illustrated in Fig. 6, at least a portion of the air inlet port 122 is disposed so as to overlap the right seat frame 28 when viewed from the side of the vehicle. With such a configuration, the right seat frame 28 can prevent mud and dust from entering the air inlet port 122.

In the motorcycle 1 according to the present embodiment, the intake passage 130 connected to the air cleaner 100 is disposed in the space between the right of the right side wall 182 of the storage box 180 and the left of the right seat frame 28. For this reason, another intake passage 210 extending upward from the transmission case 60 can be disposed to the left of the vehicle center line L1 so as not to interfere with the intake passage 130 connected to the air cleaner 100, as illustrated in Figs. 3 and 5. In other words, the intake passage 210 can be disposed in the space between the left of the left side wall 192 of the storage box 180 and the right of the left seat frame 26.

The intake passage 210 is a passage for introducing cooling air to the CVT 62 in the transmission case 60. As illustrated in Fig. 5, the intake passage 210 has a bellows-shaped duct 214 that can freely contract and expand, and a duct 216 integrally formed with the recessed portion 200 of the left side wall 192 of the storage box.

An air inlet port 212 that opens leftward is formed at a distal end portion of the duct 216. At least a portion of the air inlet port 212 is disposed in the recessed portion 200. The air inlet port 212 is an opening for sucking air. In the present embodiment, the entirety of the air inlet port 212 is disposed in the recessed portion 200. The air inlet port 212 opens toward the left from a rear side wall 198 of the left side wall 192. However, like the above-described air inlet port 122 of the intake passage 130, it is sufficient that at least a portion of the air inlet port 212 should face the rear wall 196. The mud, dust, water, and the like that are splashed up by the front wheel 7 does not easily enter the recessed portion 200. As a result, the entry of mud, dust, water and the like through the air inlet port 212 into the transmission case 60 can be prevented.

Next, the rear fender 80 will be described in detail. As illustrated in Fig. 9, the air cleaner 100 forms at least a portion of the upper portion 82 of the rear fender 80. In the present embodiment, a portion of the upper portion 82 of the rear fender 80 is formed by the second case 140. The first case 110 is disposed at a side of the rear fender 80. By disposing the first case 110 at a side of the rear fender 80 in this way, the second case 140 is ensured to have a large capacity.

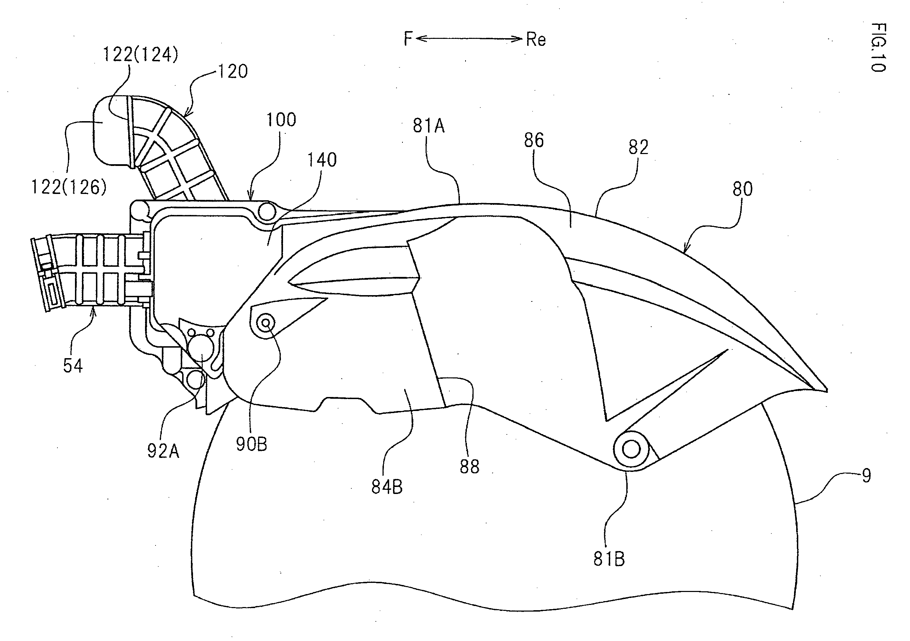

The portion of the rear fender 80 excluding the air cleaner 100 (hereinafter referred to as a "main fender portion 86") and the air cleaner 100 are assembled with each other. As illustrated in Fig. 9, the main fender portion 86 and the second case 140 of the air cleaner 100 are fastened to each other by a fastener 90A in the upper portion 82 of the rear fender 80. As illustrated in Fig. 10, the main fender portion 86 and the second case 140 of the air cleaner 100 are fastened to each other by a fastener 90B in the left side portion 84B of the rear fender 80. As illustrated in Fig. 11, the main fender portion 86 and the first case 110 of the air cleaner 100 are fastened to each other by a fastener 90C in the right side portion 84A of the rear fender 80. Examples of the fasteners 90A to 90C in the present embodiment include commonly-used bolts, screws, and rivets.

As illustrated in Fig. 5, the engine unit 40 and the air cleaner 100, which is a part of the rear fender 80, are fastened to each other by a fastener 92A. As illustrated in Fig. 6, the main fender portion 86, which is a part of the rear fender 80, and the engine unit 40 are fastened to each other by a fastener 92B. Thus, the air cleaner 100 and the main fender portion 86 are fixed to each other, and in addition, the air cleaner 100 and the main fender portion 86 are both fixed to the engine unit 40. Therefore, even when the rear fender 80 swings, the air cleaner 100 and the main fender portion 86 can be prevented from chattering and position shifting.

As illustrated in Fig. 9, the leftmost end 142 of the air cleaner 100 (more specifically, the leftmost end 142 of the second case 140) is positioned to the left of the vehicle center line L1. The rightmost end 112 of the air cleaner 100 (more specifically, the rightmost end 112 of the first case 110) is positioned to the right of the vehicle center line L1. The entire lateral part of a front portion 150 of the rear fender 80 is formed by the air cleaner 100. By forming the entire part of the front portion 150 of the rear fender 80 by the air cleaner 100 in this way, the width of the air cleaner 100 can be made large. As a result, the air cleaner 100 can be ensured to have a large capacity. It should be noted that in the present embodiment, the front portion 150 of the rear fender 80 is the front end face of the air cleaner 100, but the front portion 150 may be a portion that is more rearward than the front end face.

A boundary 152 between the main fender portion 86 and the air cleaner 100 is inclined with respect to the vehicle center line L1, as viewed in plan. The air cleaner 100 is formed so that its front-to-rear length is longer either toward the right or toward the left, as viewed in plan. In the present embodiment, a portion of the boundary 152 between the main fender portion 86 and the air cleaner 100 (more specifically, a region on the right of the laterally central part of the air cleaner 100) is inclined with respect to the vehicle center line L1 as viewed in plan. In other words, the air cleaner 100 is formed so that its front-to-rear length is longer from the left toward the right. With such a configuration, the air cleaner 100 can be ensured to have a large capacity. When the air cleaner 100 has a large capacity, a large amount of air can be sucked in at one time, so that the engine performance can be improved.

As illustrated in Fig. 4, the air cleaner 100 is formed so that, as viewed in plan, its front-to-rear length is longer from one of the left and right sides on which the footrest 35 is provided toward the other. In the present embodiment, the footrest 35 is provided to the left seat frame 26. The air cleaner 100 is formed so that its front-to-rear length is longer from the left toward the right. Thus, by making the front-to-rear length of the air cleaner 100 longer while avoiding the interference between the air cleaner 100 and the footrest 35, the air cleaner 100 can be ensured to have a large capacity.

As illustrated in Fig. 9, in the present embodiment, a recessed portion 88 in which a portion of the rear cushion unit 95 (see Fig. 5) can be accommodated is formed in a left portion of the rear fender 80. The middle position between the leftmost end 142 and the rightmost end 112 of the air cleaner 100 (see reference character L4 in Fig. 9) is biased rightward from the vehicle center line L1. In other words, the middle position of the air cleaner 100 is biased toward the opposite side to one of the left and right sides of the vehicle center line L1 in which the recessed portion 88 of the rear fender 80 is formed.

As illustrated in Fig. 11, in the present embodiment, the lower end 108 (for example, the bottom face portion of the first chamber 115) of the air cleaner 100 is positioned to be lower than the middle position between an upper end 81 A and a lower end 81B of the rear fender 80. The upper end 81A of the rear fender 80 refers to the vertically uppermost portion of the main fender portion 86 in the rear fender 80 mounted to the engine unit 40. Typically, the vertically uppermost portion of the main fender portion 86 and the vertically uppermost portion of the air cleaner 100 are located at substantially the same height from the ground. The lower end 81 B of the rear fender 80 refers to the vertically lowermost portion of the main fender portion 86 in the rear fender 80 mounted to the engine unit 40. With such a configuration, the position of the seat 13 can be made low, for example, because the air cleaner 100 is disposed at a low position. Note that the lower end 108 of the air cleaner 100 may be a bottom face portion of the second chamber 145, depending on the shape of the air cleaner 100.

The vertical length of the air cleaner 100 varies from the front toward the rear. As illustrated in Fig. 11, in the present embodiment, the maximum vertical length of the air cleaner 100 (for example, the maximum vertical length of the first chamber 115) is shorter than the vertical length of the rear fender 80 at the upper end 81A position (in other words, the vertical length thereof in the vertical cross section through the position of the upper end 81A). With such a configuration, an additional spatial margin can be ensured above the air cleaner 100 because the vertical length of the air cleaner 100 is short. As a result, it becomes possible to dispose other vehicle components above the air cleaner 100, for example. Alternatively, the position of the seat 13 may be lowered, for example. Note that the maximum vertical length of the air cleaner 100 may be the maximum vertical length of the second chamber 145, depending on the shape of the air cleaner 100.

The air cleaner 100 forms at least a portion of the upper portion 82 of the rear fender 80, and therefore, it is not necessary to dispose an air cleaner separately above the rear fender 80 (for example, over the rear fender 80). Accordingly, there is a greater additional spatial margin than the case in which an air cleaner is disposed above the rear fender, so the capacity of the air cleaner 100 can be made larger. Thereby, the air cleaning performance of the air cleaner 100 can be improved.

As described above, the air cleaner 100 according to the present embodiment forms at least a portion of the upper portion 82 of the rear fender 80. For this reason, it is not necessary to dispose an air cleaner separately above the rear fender 80. Therefore, there is a greater additional spatial margin than the case in which an air cleaner is disposed above the rear fender 80. As a result, the capacity of the air cleaner 100 can be made larger. Thereby, the air cleaning performance of the air cleaner 100 can be improved.

In the present embodiment, the leftmost end 142 of the air cleaner 100 is positioned to the left of the vehicle center line L1, and the rightmost end 122 the air cleaner 100 is positioned to the right of the vehicle center line L1. As a result, the air cleaner 100 can be ensured to have a large capacity.

In the present embodiment, the entire part of the front portion 150 of the rear fender 80 is formed by the air cleaner 100. As a result, the air cleaner 100 can be ensured to have a large capacity.

In the present embodiment, the main fender portion 80 of the rear fender 80 and the air cleaner 100 are assembled with each other, and the boundary 152 between the main fender portion 86 and the air cleaner 100 is inclined with respect to the vehicle center line L1, as viewed in plan. As a result, the air cleaner 100 can be ensured to have a large capacity.

In the present embodiment, the main fender portion 80 of the rear fender 80 and the air cleaner 100 are assembled with each other, and the air cleaner 100 is formed so that, as viewed in plan, its front-to-rear length is longer from one of the left and right sides toward the other. As a result, the air cleaner 100 can be ensured to have a large capacity.

In the present embodiment, the air cleaner 100 has the air inlet unit 120 for sucking air. The air inlet unit 120 is provided for the first case 110, which is one of the left and right side portions of the air cleaner 100, with respect to the vehicle center line L1, that has a longer front-to-rear length than the other. As a result, a relatively large space can be formed near the air inlet unit 120 within the air cleaner 100. This can improve the air-intake performance of the air cleaner 100.

In the present embodiment, a connecting portion 43 of the intake pipe 54 for connecting the intake pipe 54 to the engine 42 and a connecting portion 55 of the intake pipe 54 for connecting the intake pipe 54 to the air cleaner 100 are disposed on the vehicle center line L1, as viewed in plan. As a result, the air-intake characteristics of the engine are improved, and the engine performance is enhanced.

In the present embodiment, the body frame 20 has the main frame 24 extending rearward and obliquely downward from the head pipe 22, and the left and right seat frames 26 and 28 each extending rearward and obliquely upward from the main frame 24. The body frame 20 is provided with the passenger footrest 35 supported at a rear portion of the left seat frame 26. The air cleaner 100 is formed so that its front-to-rear length is longer from the left side, on which the footrest 35 is provided, toward the right side, as viewed in plan. This serves to avoid the interference between the air cleaner 100 and the footrest 35. In addition, the front-to-rear length of the air cleaner 100 is longer from the left side, on which the footrest 35 is provided, toward the right. Thereby, the air cleaner 100 can be ensured to have a large capacity.

In the present embodiment, the air cleaner 100 has the first case 110 and the second case 140, each having an opening formed therein, and the main filter element 170. The first case 110 and the second case 140 are assembled to each other so that their openings face each other with the main filter element 170 interposed therebetween. The first case 100 has the air inlet unit 120 for sucking air. The intake pipe 54 is connected to the second case 140. A portion of the upper portion 82 of the rear fender 80 is formed by the second case 140. As a result, a large capacity can be ensured for the second case 140 of the air cleaner 100.

In the present embodiment, the first case 110 is disposed beside the rear fender 80. As a result, a large capacity can be ensured for the second case 140 of the air cleaner 100.

In the present embodiment, the motorcycle 1 has the rear cushion unit 95 provided between a rear portion of the body frame 20 and a rear portion of the engine unit 40. One of the left side portion and the right side portion of the rear fender 80 has the recessed portion 88 in which a portion of the rear cushion unit 95 is accommodated. The middle position L4 of the air cleaner 100 that is between the leftmost end 142 and the rightmost end 112 of the air cleaner 100 is biased toward the right side from the vehicle center line L1, i.e., toward the opposite side to the left side, in which the recessed portion 88 of the rear fender 80 is formed. As a result, the capacity of the air cleaner 100 can be made large without being interfered with the rear cushion unit.

In the present embodiment, the air cleaner 100 and the main fender portion 86 of the rear fender 80 are fastened to each other by the fasteners 90A, 90B and 90C, in the upper portion 82, the left side portion 84B, and the right side portion 84A of the rear fender 80. As a result, the main fender portion 86 can be firmly secured to the air cleaner 100.

In the present embodiment, the main fender portion 86 of the rear fender 80 and the air cleaner 100 are assembled with each other. The air cleaner 100 and the engine unit 40 are fastened to each other by the fastener 92A. The main fender portion 86 and the engine unit 40 are fastened to each other by the fastener 92B. As a result, chattering and position shifting are unlikely to occur between the main fender portion 86 and the air cleaner 100. In addition, the rear fender 80 can be firmly secured to the engine unit 40.

In the present embodiment, the lower end 80 of the air cleaner 100 is positioned below the middle position of the rear fender 80 that is between the upper end 81 A of the rear fender 80 and the lower end 81 B thereof. Since the air cleaner 100 is disposed at a low position in this way, the position of the seat 13 can be made low, for example.

In the present embodiment, the air cleaner 100 has a maximum vertical length shorter than the vertical length of the rear fender 80 at the position of its upper end 81 A. Since the vertical length of the air cleaner 100 is short in this way, an additional spatial margin can be ensured above the air cleaner 100. As a result, for example, the position of the seat 13 can be made low.

### REFERENCE SIGNS LIST

- 1: -- Motorcycle (straddle-type vehicle)
- 24: -- Main frame
- 26: -- Left seat frame
- 28: -- Right seat frame
- 35: -- Footrest
- 40: -- Engine unit
- 80: -- Rear fender
- 81A: -- Upper end
- 81B: -- Lower end
- 82: -- Upper portion
- 84A: -- Right side portion
- 84B: -- Left side portion
- 86: -- Main fender portion
- 88: -- Recessed portion
- 90A, 90B, 90C: -- Fastener
- 92A, 92B: -- Fastener
- 95: -- Rear cushion unit
- 100: -- Air cleaner
- 110: -- First case
- 120: -- Air inlet unit
- 140: -- Second case
- 152: -- Boundary
- 170: -- Main filter element (dry-type element)

## Claims

1. A straddle-type vehicle comprising:
a body frame (20);
an engine unit (40) having an engine (42) and having an front end portion swingably supported by the body frame (20);
a rear wheel (9) supported at a rear end portion of the engine unit (40);
a rear fender (80) supported on the engine unit (40) so as to be swingable relative to the body frame (20) along with the rear wheel (9), the rear fender (80) covering a portion of the rear wheel (9);
an intake pipe (54) for introducing air to the engine (42); and
an air cleaner (100) connected to the intake pipe (54),
wherein the rear fender (80) has an upper portion (82) positioned above the rear wheel (9), and side portions (84A, 84B) positioned beside the rear wheel (9);
**characterized in that**
the air cleaner (100) forms at least a portion of the upper portion (82) of the rear fender (80).

2. The straddle-type vehicle according to claim 1, wherein:
a leftmost end (142) of the air cleaner (100) is positioned to the left of the vehicle center line (L1); and
a rightmost end (112) of the air cleaner (100) is positioned to the right of the vehicle center line (L1).

3. The straddle-type vehicle according to claim 1, wherein an entire lateral part of a front portion (150) of the rear fender (80) is formed by the air cleaner (100).

4. The straddle-type vehicle according to claim 1, wherein:
the air cleaner (100) and a portion of the rear fender (80) excluding the air cleaner (100) are assembled with each other; and
a boundary (152) between the air cleaner (100) and the portion of the rear fender (80) excluding the air cleaner (100) is inclined with respect to the vehicle center line (L1), as viewed in plan.

5. The straddle-type vehicle according to claim 1, wherein:
the air cleaner (100) and a portion of the rear fender (80) excluding the air cleaner (100) are assembled with each other; and
the air cleaner (100) is formed so that, as viewed in plan, its front-to-rear length is longer from one of left and right sides toward the other.

6. The straddle-type vehicle according to claim 5, wherein:
the air cleaner (100) has an air inlet unit (120) for sucking air; and
the air inlet unit (120) is provided for one of left and right side portions (84A, 84B) of the air cleaner (100), with respect to the vehicle center line (L1), that has a longer front-to-rear length than the other.

7. The straddle-type vehicle according to claim 1, wherein a connecting portion (43) of the intake pipe (54) for connecting the intake pipe (54) to the engine (42) and a connecting portion (55) thereof for connecting the intake pipe (54) to the air cleaner (100) are disposed on the vehicle center line (L1), as viewed in plan.

8. The straddle-type vehicle according to claim 1, wherein:
the body frame (20) has a main frame (24) extending rearward and obliquely downward from a head pipe (22), and right and left seat frames (26, 28) each extending rearward and obliquely upward from the main frame (24); and further comprising
a passenger footrest (35) supported at a rear portion of only one of the right and left seat frames (26, 28); and wherein
the air cleaner (100) is formed so that its front-to-rear length is longer from one of left and right sides on which the passenger footrest (35) is provided toward the other.

9. The straddle-type vehicle according to claim 1, wherein:
the air cleaner (100) has a first case (110) and a second case (140), each having an opening formed therein, and an element;
the first case (110) and the second case (140) are assembled to each other so that their openings face each other with the main filter element interposed therebetween;
the first case (110) has an air inlet unit (120) for sucking air;
the intake pipe (54) is connected to the second case (140); and
a portion of the upper portion (82) of the rear fender (80) is formed by the second case (140).

10. The straddle-type vehicle according to claim 9, wherein the first case (110) is disposed beside the rear fender (80).

11. The straddle-type vehicle according to claim 1, further comprising:
a rear cushion unit (95) provided between a rear portion of the body frame (20) and a rear portion of the engine unit (40); and wherein
one of a left side portion (84B) and a right side portion (84A) of the rear fender (80) has a recessed portion (88) in which a portion of the rear cushion unit (95) is accommodated; and
a middle position of the air cleaner (100) that is between a leftmost end (142) and a rightmost end (112) of the air cleaner (100) is biased toward an opposite side to one of left and right sides of the vehicle center line (L1) in which the recessed portion (88) of the rear fender (80) is formed.

12. The straddle-type vehicle according to claim 1, wherein the air cleaner (100) and a portion of the rear fender (80) excluding the air cleaner (100) are fastened to each other by a fastener (90A, 90B, 90C) in the upper portion (82), a left side portion (84B), and a right side portion (84A) of the rear fender (80).

13. The straddle-type vehicle according to claim 1, wherein:
the air cleaner (100) and a portion of the rear fender (80) excluding the air cleaner (100) are assembled with each other;
the air cleaner (100) and the engine unit (40) are fastened to each other by a fastener (92A); and
the engine unit (40) and the portion of the rear fender (80) excluding the air cleaner (100) are fastened to each other by a fastener (92B).

14. The straddle-type vehicle according to claim 1, wherein a lower end (81B) of the air cleaner (100) is positioned below a middle position of the rear fender (80) that is between an upper end of the rear fender (80) and a lower end thereof.

15. The straddle-type vehicle according to claim 1, wherein the air cleaner (100) has a maximum vertical length shorter than a vertical length of the rear fender (80) at its upper end position.

## Patentansprüche

1. Ein Grätsch-Typ-Fahrzeug, das folgende Merkmale aufweist:
einen Körperrahmen (20);
eine Motoreinheit (40) mit einem Motor (42) und mit einem vorderen Endabschnitt, der schwingfähig durch den Körperrahmen (20) getragen wird;
ein Hinterrad (9), das an einem hinteren Endabschnitt der Motoreinheit (40) getragen wird;
einen hinteren Kotflügel (80), der an der Motoreinheit (40) getragen wird, um relativ zu dem Körperrahmen (20) zusammen mit dem Hinterrad (9) schwingfähig zu sein, wobei der hintere Kotflügel (80) einen Teil des Hinterrades (9) bedeckt;
ein Einlassrohr (54) zum Einführen von Luft in den Motor (42); und
einen Luftreiniger (100), der mit dem Einlassrohr (54) verbunden ist,
wobei der hintere Kotflügel (80) einen oberen Abschnitt (82), der über dem Hinterrad (9) positioniert ist, und seitliche Abschnitte (84A, 84B), die neben dem Hinterrad (9) positioniert sind, aufweist;
**dadurch gekennzeichnet, dass**:
der Luftreiniger (100) zumindest einen Abschnitt des oberen Abschnitts (82) des hinteren Kotflügels (80) bildet.

2. Das Grätsch-Typ-Fahrzeug gemäß Anspruch 1, bei dem:
ein Ende ganz links (142) des Luftreinigers (100) links von der Fahrzeugmittellinie (L1) positioniert ist; und
ein Ende ganz rechts (112) des Luftreinigers (100) rechts von der Fahrzeugmittellinie (L1) positioniert ist.

3. Das Grätsch-Typ-Fahrzeug gemäß Anspruch 1, bei dem ein vollständiger seitlicher Teil eines vorderen Abschnitts (150) des hinteren Kotflügels (80) durch den Luftreiniger (100) gebildet ist.

4. Das Grätsch-Typ-Fahrzeug gemäß Anspruch 1, bei dem:
der Luftreiniger (100) und ein Abschnitt des hinteren Kotflügels (80) ausschließlich des Luftreinigers (100) zusammengefügt sind; und
eine Grenze (152) zwischen dem Luftreiniger (100) und dem Abschnitt des hinteren Kotflügels (80) ausschließlich des Luftreinigers (100) in Draufsicht in Bezug auf die Fahrzeugmittellinie (L1) geneigt ist.

5. Das Grätsch-Typ-Fahrzeug gemäß Anspruch 1, bei dem:
der Luftreiniger (100) und ein Abschnitt des hinteren Kotflügels (80) ausschließlich des Luftreinigers (100) zusammengefügt sind; und
der Luftreiniger (100) so gebildet ist, dass in Draufsicht seine Länge von vorne nach hinten länger ist als eine von der linken und rechten Seite in Richtung der anderen.

6. Das Grätsch-Typ-Fahrzeug gemäß Anspruch 5, bei dem:
der Luftreiniger (100) eine Lufteintrittseinheit (120) zum Ansaugen von Luft aufweist; und
die Lufteintrittseinheit (120) für einen eines linken und eines rechten Seitenabschnitts (84A, 84B) des Luftreinigers (100), in Bezug auf die Fahrzeugmittellinie (L1), vorgesehen ist, der eine längere Länge von vorne nach hinten aufweist als der andere.

7. Das Grätsch-Typ-Fahrzeug gemäß Anspruch 1, bei dem ein Verbindungsabschnitt (43) des Einlassrohrs (54) zum Verbinden des Einlassrohrs (54) mit dem Motor (42) und ein Verbindungsabschnitt (55) desselben zum Verbinden des Einlassrohrs (54) mit dem Luftreiniger (100) in Draufsicht auf der Fahrzeugmittellinie (L1) angeordnet sind.

8. Das Grätsch-Typ-Fahrzeug gemäß Anspruch 1, bei dem:
der Körperrahmen (20) einen Hauptrahmen (24), der sich von einem Kopfrohr (22) nach hinten und schräg nach unten erstreckt, und einen rechten und einen linken Sitzrahmen (26, 28) aufweist, die sich von dem Hauptrahmen (24) jeweils nach hinten und schräg nach oben erstrecken; und das ferner folgendes Merkmal aufweist:
eine Passagier-Fußstütze (35), die an einem hinteren Abschnitt von nur einem des rechten und des linken Sitzrahmens (26, 28) getragen wird; und bei dem:
der Luftreiniger (100) so gebildet ist, dass seine Länge von vorne nach hinten von einer der linken und der rechten Seite, an der die Passagier-Fußstütze (35) vorgesehen ist, in Richtung der anderen länger ist.

9. Das Grätsch-Typ-Fahrzeug gemäß Anspruch 1, bei dem:
der Luftreiniger (100) ein erstes Gehäuse (110) und ein zweites Gehäuse (140), in denen jeweils eine Öffnung gebildet ist, und ein Element aufweist;
das erste Gehäuse (110) und das zweite Gehäuse (140) so zusammengefügt sind, dass ihre Öffnungen einander zugewandt sind und das Hauptfilterelement zwischen denselben angeordnet ist;
das erste Gehäuse (110) eine Lufteintrittseinheit (120) zum Ansaugen von Luft aufweist;
das Einlassrohr (54) mit dem zweiten Gehäuse (140) verbunden ist; und
ein Abschnitt des oberen Abschnitts (82) des hinteren Kotflügels (80) durch das zweite Gehäuse (140) gebildet ist.

10. Das Grätsch-Typ-Fahrzeug gemäß Anspruch 9, bei dem das erste Gehäuse (110) neben dem hinteren Kotflügel (80) angeordnet ist.

11. Das Grätsch-Typ-Fahrzeug gemäß Anspruch 1, das ferner folgendes Merkmal aufweist:
eine Rückpolstereinheit (95), die zwischen einem hinteren Abschnitt des Körperrahmens (20) und einem hinteren Abschnitt der Motoreinheit (40) vorgesehen ist; und bei dem:
einer eines linken Seitenabschnitts (84B) und eines rechten Seitenabschnitts (84A) des hinteren Kotflügels (80) einen zurückgesetzten Abschnitt (88) aufweist, in dem ein Abschnitt der Rückpolstereinheit (95) untergebracht ist; und
eine Mittelposition des Luftreinigers (100), die zwischen einem Ende ganz links (142) und einem Ende ganz rechts (112) des Luftreinigers (100) liegt, in Richtung einer gegenüberliegenden Seite zu einer der linken und der rechten Seite der Fahrzeugmittellinie (L1), in der der zurückgesetzte Abschnitt (88) des hinteren Kotflügels (80) gebildet ist, vorgespannt ist.

12. Das Grätsch-Typ-Fahrzeug gemäß Anspruch 1, bei dem der Luftreiniger (100) und ein Abschnitt des hinteren Kotflügels (80) ausschließlich des Luftreinigers (100) durch eine Befestigungsvorrichtung (90A, 90B, 90C) in dem oberen Abschnitt (82), einem linken Seitenabschnitt (84B) und einem rechten Seitenabschnitt (84A) des hinteren Kotflügels (80) aneinander befestigt sind.

13. Das Grätsch-Typ-Fahrzeug gemäß Anspruch 1, bei dem:
der Luftreiniger (100) und ein Abschnitt des hinteren Kotflügels (80) ausschließlich des Luftreinigers (100) zusammengefügt sind;
der Luftreiniger (100) und die Motoreinheit (40) durch eine Befestigungsvorrichtung (92A) aneinander befestigt sind; und
die Motoreinheit (40) und der Abschnitt des hinteren Kotflügels (80) ausschließlich des Luftreinigers (100) durch eine Befestigungsvorrichtung (92B) aneinander befestigt sind.

14. Das Grätsch-Typ-Fahrzeug gemäß Anspruch 1, bei dem ein unteres Ende (81 B) des Lufteinigers (100) unter einer Mittelposition des hinteren Kotflügels (80) positioniert ist, die zwischen einem oberen Ende des hinteren Kotflügels (80) und einem unteren Ende desselben liegt.

15. Das Grätsch-Typ-Fahrzeug gemäß Anspruch 1, bei dem der Luftreiniger (100) eine maximale vertikale Länge aufweist, die kürzer ist als eine vertikale Länge des hinteren Kotflügels (80) an seiner oberen Endposition.

## Revendications

1. Véhicule du type à selle, comprenant:
un châssis de carrosserie (20);
une unité de moteur (40) présentant un moteur (42) et présentant une partie d'extrémité avant supportée de manière pivotante par le châssis de carrosserie (20);
une roue arrière (9) supportée sur une partie d'extrémité arrière de l'unité de moteur (40);
un garde-boue arrière (80) supporté sur l'unité de moteur (40) de manière à pouvoir pivoter par rapport au châssis de carrosserie (20) le long de la roue arrière (9), le garde-boue arrière (80) recouvrant une partie de la roue arrière (9);
un tuyau d'admission (54) destiné à introduire de l'air dans le moteur (42); et
un filtre à air (100) connecté au tuyau d'admission (54),
dans lequel le garde-boue arrière (80) présente une partie supérieure (82) positionnée au-dessus de la roue arrière (9), et des parties latérales (84A, 84B) positionnées à côté de la roue arrière (9);
**caractérisé par le fait que**
le filtre à air (100) forme au moins une portion de la partie supérieure (82) du garde-boue arrière (80).

2. Véhicule du type à selle selon la revendication 1, dans lequel:
une extrémité extrême gauche (142) du filtre à air (100) est positionnée à la gauche de la ligne centrale du véhicule (L1); et
une extrémité extrême droite (112) du filtre à air (100) est positionnée à la droite de la ligne centrale du véhicule (L1).

3. Véhicule du type à selle selon la revendication 1, dans lequel une partie latérale entière d'une partie avant (150) du garde-boue arrière (80) est formée par le filtre à air (100).

4. Véhicule du type à selle selon la revendication 1, dans lequel:
le filtre à air (100) et une partie du garde-boue arrière (80) à l'exclusion du filtre à air (100) sont assemblés l'un à l'autre; et
une limite (152) entre le filtre à air (100) et la partie du garde-boue arrière (80) à l'exclusion du filtre à air (100) est inclinée par rapport à la ligne centrale du véhicule (L1), tel que vu en plan.

5. Véhicule du type à selle selon la revendication 1, dans lequel:
le filtre à air (100) et une partie du garde-boue arrière (80) à l'exclusion du filtre à air (100) sont assemblés l'un à l'autre; et
le filtre à air (100) est formé de sorte que, tel que vu en plan, sa longueur de l'avant à l'arrière soit plus grande de l'un des côtés gauche et droit vers l'autre.

6. Véhicule du type à selle selon la revendication 5, dans lequel:
le filtre à air (100) présente une unité d'entrée d'air (120) destinée à aspirer de l'air; et
l'unité d'entrée d'air (120) est prévue pour l'une des parties latérales gauche et droite (84A, 84B) du filtre à air (100), par rapport à la ligne centrale du véhicule (L1), qui présente une longueur de l'avant vers l'arrière plus grande que l'autre.

7. Véhicule du type à selle selon la revendication 1, dans lequel une partie de connexion (43) du tuyau d'admission (54) destinée à connecter le tuyau d'admission (54) au moteur (42) et une partie de connexion (55) de ce dernier destinée à connecter le tuyau d'admission (54) au filtre à air (100) sont disposées sur la ligne centrale du véhicule (L1), tel que vu en plan.

8. Véhicule du type à selle selon la revendication 1, dans lequel:
le châssis de carrosserie (20) présente un châssis principal (24) s'étendant vers l'arrière et obliquement vers le bas depuis un tuyau de tête (22), et des châssis de siège droit et gauche (26, 28) s'étendant, chacun, vers l'arrière et obliquement vers le haut à partir du châssis principal (24); et comprenant par ailleurs
un repose-pieds de passager (35) supporté sur une partie arrière d'un seul parmi les châssis de siège droit et gauche (26, 28); et dans lequel
le filtre à air (100) est formé de sorte que sa longueur de l'avant vers l'arrière soit plus grande de l'un des côtés gauche et droit sur lequel est prévu le repose-pieds de passager (35) vers l'autre.

9. Véhicule du type à selle selon la revendication 1, dans lequel:
le filtre à air (100) présente un premier boîtier (110) et un deuxième boîtier (140) présentant, chacun, une ouverture y formée, et un élément;
le premier boîtier (110) et le deuxième boîtier (140) sont assemblés l'un à l'autre de sorte que leurs ouvertures se fassent face avec l'élément de filtre principal interposé entre elles;
le premier boîtier (110) présente une unité d'entrée d'air (120) destinée à aspirer de l'air;
le tuyau d'admission (54) est connecté au deuxième boîtier (140); et
une portion de la partie supérieure (82) du garde-boue arrière (80) est formée par le deuxième boîtier (140).

10. Véhicule du type à selle selon la revendication 9, dans lequel le premier boîtier (110) est disposé à côté du garde-boue arrière (80).

11. Véhicule du type à selle selon la revendication 1, comprenant par ailleurs:
une unité de coussin arrière (95) prévue entre une partie arrière du châssis de carrosserie (20) et une partie arrière de l'unité de moteur (40); et dans lequel
l'une parmi une partie de côté gauche (84B) et une partie de côté droit (84A) du garde-boue arrière (80) présente une partie évidée (88) dans laquelle est logée une partie de l'unité de coussin arrière (95); et
une position centrale du filtre à air (100) qui se situe entre une extrémité extrême gauche (142) et une extrémité extrême droite (112) du filtre à air (100) est déviée vers un côté opposé vers l'un des côtés gauche et droit de la ligne centrale du véhicule (L1) dans lequel est formée la partie évidée (88) du garde-boue arrière (80).

12. Véhicule du type à selle selon la revendication 1, dans lequel le filtre à air (100) et une partie du garde-boue arrière (80) à l'exclusion du filtre à air (100) sont fixés l'un à l'autre par un élément de fixation (90A, 90B, 90C) dans la partie supérieure (82), une partie latérale gauche (84B), et une partie latérale droite (84A) du garde-boue arrière (80).

13. Véhicule du type à selle selon la revendication 1, dans lequel:
le filtre à air (100) et une partie du garde-boue arrière (80) à l'exclusion du filtre à air (100) sont assemblés l'un à l'autre;
le filtre à air (100) et l'unité de moteur (40) sont fixés l'un à l'autre par un élément de fixation (92A); et
l'unité de moteur (40) et la partie du garde-boue arrière (80) à l'exclusion du filtre à air (100) sont fixés l'un à l'autre par un élément de fixation (92B).

14. Véhicule du type à selle selon la revendication 1, dans lequel une extrémité inférieure (81B) du filtre à air (100) est positionnée au-dessous d'une position centrale du garde-boue arrière (80) qui se situe entre une extrémité supérieure du garde-boue arrière (80) et une extrémité inférieure de ce dernier.

15. Véhicule du type à selle selon la revendication 1, dans lequel le filtre à air (100) présente une longueur verticale maximale plus courte qu'une longueur verticale du garde-boue (80) dans sa position d'extrémité supérieure.
